# EUROPEAN PATENT SPECIFICATION

(11) **EP 1 266 121 B1**
(45) Date of publication and mention of the grant of the patent: **21.12.2005**
(21) Application number: 00984939.9
(22) Date of filing: 22.11.2000
(51) Int. Cl.: E21B 43/00

(54) **METHODS FOR IMPROVING OIL PRODUCTION**
VERFAHREN ZUR VERBESSERUNG DER GEWINNUNG VON ÖL
PROCEDES POUR AMELIORER LA PRODUCTION PETROLIERE

(30) Priority: 14.03.2000 EA 200000097
(43) Date of publication of application: 18.12.2002
(73) Proprietor: Kerimov, Ikram Gadji Aga Ogly, Baku, 370000 (AZ); Kerimov, Seymur Ikram Ogly, Baku, 370000 (AZ)
(72) Inventor: Kerimov, Ikram Gadji Aga Ogly, Baku, 370000 (AZ); Kerimov, Seymur Ikram Ogly, Baku, 370000 (AZ)
(74) Representative: Henrion, Oliver
(86) International application number: PCT/EA2000/000008
(87) International publication number: WO 2001/069038

(56) References cited:
- EP-A- 0 676 530
- US-A- 5 396 955
- US-A- 5 826 653

## Description

The invention relates to oil production industry, and is applied for increasing oil production and oil recovery of an oil-bearing bed (oil field) by subjecting it to the action of vibrations from the Earth's surface.

Known in the art is a method of subjecting an oil-bearing bed to the action of vibrations wherein this action is performed immediately in the bed through an additionally drilled well (see RU 2105135 C1, 20/02/1998).

Also known is a method of subjecting an oil-bearing bed (oil field) to the action of vibrations from the Earth's surface (see RU 2078913 C1, 10/05/1997).

The prior-art methods are disadvantageous in that vibrators are installed in an arbitrary manner without taking into account the stressed state of the bed. This results in a relatively low (local) increase of oil production and, correspondingly, in larger economical expenses.

The ultimate object of the combination of technical solutions is to increase oil production and recovery of an oil-bearing bed.

With this and other objects in view, the method comprises determining the character of the stressed state of an oil-bearing bed, finding out active points on the Earth's surface, that can be advantageously acted upon to increase oil production, and further finding out points in which drilling of the wells is most expedient and which will be exploited, after the drilling is completed, as oil production wells.

According to the method of determining seismically active points on the Earth's surface of an oil field, measurements of the amplitudes of microseismic waves are taken on an area larger than the oil field area, and, after taking a first measurment, a test vibration action is effected on this area, and then a second measurement is made, the difference in the amplitudes of these measurements being indicative of the character of activity of the points on the chosen territory. (Here and below, the term "point" is understood as a part of the surface on which investigations are carried out and the appropriate equipment required for taking measurements and/or vibration actions is installed).

The area on which the amplitudes of microseismic waves are measured is chosen such that its linear dimensions be approximately twice the linear dimensions of the deposit.

In the method of subjecting the Earth's surface to the action of vibrations for increasing oil production and recovery, this vibration action is carried out in the points where the difference of the amplitudes of microseismic waves, determined using the method mentioned above, before and after the vibration action, would be maximum. The vibration frequencies used are in the range from 10 to 30 Hz. The frequency of said vibrations may be increasing, decreasing and variable. The time of subjecting the deposit to vibrations is from two to four weeks for 6 to 8 hours daily. It is also advantageous to perform it periodically, in other words, when, after periods of increased oil production (as a result of the previous actions), a tendency to a decline in oil production and/or a decrease in the stratum pressure are observed. However the decrease in oil production and/or stratum pressure must not be permitted to drop to the level existing before the previous exposure to the vibration action.

We have proved in our works that the deposits and the medium surrounding and holding them are not homogeneous from the viewpoint of energy distribution therein. There are local volumes featuring considerably greater energy concentration than that of the holding medium. As we have found, it is manifested as active and inactive points existing on the Earth's surface. By acting upon the active points, it is possible to cause a discharge of local high-energy volumes so that the total energy of the stressed state in the surrounding medium increases, which will correspondingly result in an increase of the stratum pressures and the level of oil production. With an elapse of a certain period of time, however, because of an inhomogeneous structure of the medium, such as an unequal amounts of cracks in separate sections, new local high-energy volumes will appear. Their presence is again revealed by the test actions upon the surface, and active points are again determined, that are subsequently subjected to vibration.

In the process of the works, after several cycles of vibration actions, a certain number of points were found that were stable in manifesting themselves as active or inactive. We further found that a definite mutual influence existed between wells or groups of wells or separate oil fields. These mutual influences were of a non-controllable character and could influence on oil production and recovery in both directions of variation. In some cases it resulted in a decrease of 15 to 35% in oil production. It seems therefore most preferable to locate oil production wells in the inactive points to prevent or reduce, as much as possible, these uncontrollable mutual influences.

On the contrary, recommendations for the wells into which liquids are to be pumped are of an opposite character, in other words they must be located in the active points to increase, as much as possible, the front and time of action of the liquid on the bed.

In the method of determining the points for drilling oil wells, they are chosen above the deposit in the sites where the difference of the amplitudes of microseismic waves determined according to the first method before and after several cycles of subjecting the deposit to vibration actions are minimum.

The process of the claimed invention includes the following sequential operations:
(1) determining the character of variation of response signals.
   This operation is carried out in the following way. An area is chosen above an oil field on the Earth's surface, the linear dimensions of said area being twice the linear dimensions of the oil field. Such dimensions are taken because an oil bed is surrounded by other structures of which the stressed state is transmitted to the bed being investigated. Practice has shown that the chosen area, as regards the above mentioned dimensions, is sufficient for the stressed state lying around the oil field to be effectively used.
   Then, measurement of seismic noises is taken over this surface.
   Further, vibrators are installed on the same chosen surface approximately uniformly, so far as the relief permits, and vibration actions are exerted on this zone (area). If the number of the vibrators is insufficient, they can be transferred to a new site of the chosen area after the last vibration action.
   After the vibration actions have been completed, a second measurement of seismic noises is taken that are also put down on a map, and comparison of the measured values is made. The points where both the maximum and the minimum variations occur will be of interest to us.
   The points where the maximum variations of the response signals take place are noted for installing vibrators therein to act upon the oil field.
   The points where the minimum variations of the response signals occur consistently are noted as the surfaces for installing drilling rigs therein to drill oil wells.
(2) subjecting the points, in which the difference of the amplitudes of microseismic waves before and after the vibration actions is maximum, to the action of vibrations.
   Use is made for the purpose of vibrators of a known design that create complex vibrations which, depending on the aims in view, can work in different modes, namely, increasing, as from 15 to 30 Hz, decreasing, from 30 to 15 Hz, and variable (complicated) ones. This is principally important insofar as the beds are inhomogeneous in their structure.
   Practice has shown that it is suffice to subject each point to the vibration action during two to four weeks for 6 to 8 hours daily.
   Studies have shown that subjecting these seismically active points to the action of vibrations has a most favourable effect on an increase of the oil recovery of the bed. Therefore, for a substantial increase of the oil recovery of the bed, it is just the seismically active points that are to be subjected to vibrations. The vibration action must be carried out periodically, and a new action must be started after a decrease in the oil production on the oil field begins to decline without permitting it to fall to the original state.
   Depending on the properties of the me ium, the geological and geophysical specific features of the deposit structure and the oil characteristics, intensification of oil production is retained for 6 to 15 months, and then the entire cycle of works must be repeated. In practice, however, more preferable and economically efficient is to conduct the procedure every 3 to 6 months. This permits of maintaining a high level of stratum pressures and, correspondingly, the level of additional oil production.
(3) the choice of the points for drilling oil wells, where the difference of the amplitudes of microseismic waves before and after the vibration action is minimum.

This is necessary to exclude the mutual influence of the wells because any well acts as a microvibrator and produces a vibration field around itself, though its vibrations are very weak. In the active points these vibrations would exert non-controllable influence on the performance of other wells, while with their location in the points with a minimum variation of the amplitude, they do not exert any essential influence on each other.

These results have been obtained by conducting the appropriate studies into a large number of wells and oil fields during several years.

The procedure of the claimed invention permits of increasing oil production by 20 to 30% and more, and increasing oil recovery by 45% and more.

As against the prior-art methods of increasing oil production which pay back the money spent for their realisation after several years, the procedure of the claimed invention is economically highly effective and is paid back after several months. The procedure according to the invention is ecologically correct and highly effective, prevents contamination and destruction of the oil pool and the medium surrounding it, prevents deterioration of the reservoir properties of the oil pool.

## Claims

1. A method of determining the character of microseismic waves by taking measurements of the amplitudes of these waves, ***characterized* in that** it further comprises taking measurement of the amplitudes of microseismic waves over an area larger than the area of the oil field, said area being subjected to the action of test vibrations after said first measurement, taking a second measurement, and determining the activity character of points on the chosen surface by the difference of the amplitudes obtained from these measurements.

2. The method of Claim 1, ***characterized* in that** the area on which measurements of the amplitudes of microseismic waves are taken is chosen such that the linear dimensions thereof be twice the linear dimensions of the oil field.

3. The method of Claims 1 and 2, ***characterized* in that** subjecting said chosen area to test vibrations is performed before each method claimed in Claims 5 to 13 given below.

4. The method of Claims 1 to 3, ***characterized* in that** subjecting said chosen area to test vibrations is performed during one to two days.

5. A method of subjecting the Earth's surface to the action of vibrations for increasing oil production and recovery of an oil field, ***characterized* in that** the vibration action is effected in points where the difference of the amplitudes of microseismic waves, determined using the method claimed in Claims 1 and 2 before and after the vibration actions, is maximum.

6. The method of Claim 3, ***characterized* in that** the range of frequencies of said vibrations is from 10 to 30 Hz.

7. The method of Claims 3 to 4, ***characterized* in that** said vibration action is effected with the use of an increasing frequency.

8. The method of Claims 3 to 4, ***characterized* in that** said vibration action is effected with the use of a decreasing frequency.

9. The method of Claims 3 to 4, ***characterized* in that** said vibration action is effected with the use of a variable frequency.

10. The method of Claims 3 to 7, ***characterized* in that** the time of the vibration action is from two to four weeks for 6 to 8 hours daily.

11. The method of Claims 3 to 8, ***characterized* in that** the vibration action is carried out periodically.

12. The method of Claims 3 to 8, ***characterized* in that** the vibration action is performed upon a decrease in oil production and/or stratum pressure.

13. The method of Claims 3 to 10, ***characterized* in that** the vibration action is performed upon a decrease in oil production, but without letting the oil production and/or stratum pressure to fall to the level existing before the vibration action.

14. A method of determining points for drilling oil wells, ***characterized* in that** said points are chosen above the oil field in the sited where the difference of the amplitudes of microseismic waves, determined according to the method of Claim 1 before and after the vibration action, are minimum.

## Patentansprüche

1. Verfahren zur Bestimmung des Charakters von mikroseismischen Wellen durch Messung der Amplituden dieser Wellen, **dadurch gekennzeichnet, daß** es weiter umfaßt die Vornahme einer Messung der Amplituden von mikroseismischen Wellen über eine Fläche, die größer ist, als die Fläche des Ölfeldes, wobei diese Fläche nach dieser ersten Messung der Einwirkung von Testvibrationen ausgesetzt wird, die Vornahme einer zweiten Messung und die Bestimmung des Aktivitätscharakters von Punkten auf der gewählten Oberfläche durch die Differenz der in den Messungen erhaltenen Amplituden.

2. Verfahren nach Anspruch 1, **dadurch gekennzeichnet, daß** die Fläche auf welcher die Messungen der Amplituden der mikroseismischen Wellen vorgenommen wird so ausgewählt wird, daß deren lineare Dimensionen das Doppelte der linearen Dimensionen des Ölfelds betragen.

3. Verfahren nach Anspruch 1 und 2, **dadurch gekennzeichnet, daß** die Beaufschlagung der ausgewählten Fläche mit Testvibrationen jeweils vor den Verfahren gemäß den Ansprüchen 5 bis 13 vorgenommen wird.

4. Verfahren nach einem der Ansprüche 1 bis 3, **dadurch gekennzeichnet, daß** die Beaufschlagung der gewählten Fläche mit Testvibrationen über ein bis zwei Tage erfolgt.

5. Verfahren zur Beaufschlagung der Erdoberfläche mit Vibrationseinwirkungen zur Erhöhung der Ölproduktion und der Ausbeute eines Ölfelds, **dadurch gekennzeichnet, daß** die Vibrationseinwirkung in Punkten bewirkt wird, in denen die nach dem Verfahren gemäß Anspruch 1 und 2 vor und nach den Vibrationseinwirkungen bestimmte Differenz der Amplituden von mikroseismischen Wellen maximal ist.

6. Verfahren nach Anspruch 3, **dadurch gekennzeichnet, daß** der Frequenzbereich der Vibrationen zwischen 10 und 30 Hz liegt.

7. Verfahren nach Anspruch 3 bis 4, **dadurch gekennzeichnet, daß** die Vibrationseinwirkung unter Verwendung einer ansteigenden Frequenz bewirkt wird.

8. Verfahren nach Anspruch 3 bis 4, **dadurch gekennzeichnet, daß** die Vibrationseinwirkung unter Verwendung einer abnehmenden Frequenz bewirkt wird.

9. Verfahren nach Anspruch 3 bis 4, **dadurch gekennzeichnet, daß** die Vibrationseinwirkung unter Verwendung einer variablen Frequenz bewirkt wird.

10. Verfahren nach Anspruch 3 bis 7, **dadurch gekennzeichnet, daß** die Zeit der Vibrationseinwirkung 6 bis 8 Stunden täglich über zwei bis vier Wochen beträgt.

11. Verfahren nach Anspruch 3 bis 8, **dadurch gekennzeichnet, daß** die Vibrationseinwirkung periodisch vorgenommen wird.

12. Verfahren nach Anspruch 3 bis 8, **dadurch gekennzeichnet, daß** die Vibrationseinwirkung nach einem Abfall der Ölproduktion oder des Drucks der Schicht vorgenommen wird.

13. Verfahren nach Anspruch 3 bis 10, **dadurch gekennzeichnet, daß** die Vibrationseinwirkung nach einem Abfall der Ölproduktion vorgenommen wird, wobei man die Ölproduktion und/oder den Druck der Schicht nicht auf das Niveau vor der Vibrationseinwirkung sinken läßt.

14. Verfahren zur Bestimmung von Bohrpunkten für Ölquellen, **dadurch gekennzeichnet, daß** die Punkte über dem Ölfeld an den Stellen gewählt werden, in denen die gemäß Anspruch 1 vor und nach der Vibrationseinwirkung bestimmte Differenz der Amplituden der mikroseismischen Wellen minimal ist.

## Revendications

1. Procédé pour déterminer le caractère d'ondes microséismiques, par la prise de mesures des amplitudes de ces ondes, ***caractérisé* en ce qu'**il comprend en outre, la prise de mesure des amplitudes d'ondes microséismiques sur une zone supérieure à la zone du champ pétrolifère, ladite zone étant soumise à l'action de vibrations d'essai, après ladite première mesure, la prise d'une deuxième mesure et la détermination du caractère de l'activité de points sur la surface choisie, par la différence des amplitudes obtenues d'après ces mesures.

2. Procédé selon la revendication 1, ***caractérisé* en ce que** la zone sur laquelle des mesures des amplitudes d'ondes microséismiques sont prises, est choisie de telle sorte que les dimensions linéaires de celle-ci sont égales au double des dimensions linéaires du champ pétrolifère.

3. Procédé selon la revendication 1 et 2, ***caractérisé* en ce que** l'action de soumettre ladite zone choisie à des vibrations d'essai, est exécutée avant chaque procédé revendiqué dans les revendications 5 à 13, énoncées ci-dessous.

4. Procédé selon les revendications 1 à 3, ***caractérisé* en ce que** l'action de soumettre ladite zone choisie à des vibrations d'essai, est exécutée pendant un à deux jours.

5. Procédé pour soumettre la surface de la Terre à l'action de vibrations pour accroître la production et la récupération de pétrole d'un champ pétrolifère, ***caractérisé* en ce que** l'action des vibrations est exercée en des points où la différence des amplitudes d'ondes microséismiques, déterminée au moyen du procédé revendiqué dans les revendications 1 et 2, avant et après l'action des vibrations, est maximale.

6. Procédé selon la revendication 3, ***caractérisé* en ce que** la gamme de fréquences desdites vibrations est comprise entre 10 et 30 Hz.

7. Procédé selon les revendications 3 à 4, ***caractérisé* en ce que** ladite action des vibrations est exercée à l'aide d'une fréquence croissante.

8. Procédé selon les revendications 3 à 4, ***caractérisé* en ce que** ladite action des vibrations est exercée à l'aide d'une fréquence décroissante.

9. Procédé selon les revendications 3 à 4, ***caractérisé* en ce que** ladite action des vibrations est exercée à l'aide d'une fréquence variable.

10. Procédé selon les revendications 3 à 7, ***caractérisé* en ce que** la durée de l'action des vibrations est comprise entre deux et quatre semaines, à raison de six à huit heures par jour.

11. Procédé selon les revendications 3 à 8, ***caractérisé* en ce que** l'action des vibrations est exercée périodiquement.

12. Procédé selon les revendications 3 à 8, ***caractérisé* en ce que** l'action des vibrations est exercée lors d'une diminution de la production de pétrole et/ou de la pression des strates.

13. Procédé selon les revendications 3 à 10, ***caractérisé* en ce que** l'action des vibrations est exercée lors d'une diminution de la production de pétrole, mais sans laisser la production de pétrole et/ou la pression des strates chuter au niveau existant avant l'action des vibrations.

14. Procédé pour déterminer des points de forage de puits de pétrole, ***caractérisé* en ce que** lesdits points sont choisis au-dessus du champ pétrolifère sur les sites où la différence des amplitudes d'ondes microséismiques, déterminée selon le procédé de la revendication 1, avant et après l'action des vibrations, est minimale.
